(19) Europäisches Patentamt
European Patent Office
Office européen des brevets

(11) EP 1 707 608 A1

(12) EUROPEAN PATENT APPLICATION
published in accordance with Art. 158(3) EPC

(43) Date of publication:
04.10.2006 Bulletin 2006/40

(51) Int Cl.:
C09K 3/00 (2006.01)    B32B 15/08 (2006.01)
B32B 27/28 (2006.01)   F16F 15/02 (2006.01)
F16F 15/04 (2006.01)   F16F 7/08 (2006.01)
C08L 101/00 (2006.01)

(21) Application number: 05703840.8

(22) Date of filing: 19.01.2005

(86) International application number:
PCT/JP2005/000603

(87) International publication number:
WO 2005/068577 (28.07.2005 Gazette 2005/30)

(84) Designated Contracting States:
AT BE BG CH CY CZ DE DK EE ES FI FR GB GR
HU IE IS IT LI LT LU MC NL PL PT RO SE SI SK TR

(30) Priority: 20.01.2004 JP 2004012330

(71) Applicant: KABUSHIKI KAISHA KOBE SEIKO SHO
Kobe-shi,
Hyogo 651-8585 (JP)

(72) Inventors:
• SUGIMOTO, Akio
Kobe Corp. Research Laboratories
Kobe-shi,
Hyogo 6512271 (JP)

• NAKANISHI, H.
Kobe Corp. Research Laboratories
Kobe-shi,
Hyogo 6512271 (JP)
• ARAKI, Shigetoshi
Hirakata-shi,
Osaka 5730071 (JP)

(74) Representative: Müller-Boré & Partner
Patentanwälte
Grafinger Strasse 2
81671 München (DE)

(54) DAMPING MATERIAL AND DAMPING METAL SHEET

(57) A damping material and a damping metal sheet that have excellent damping performance are provided. (1) A damping material including at least one type of polymeric material, wherein the polymeric material has a sea-island structure, the loss factor tan $\delta_I$ of a polymeric material constituting the island phase of the sea-island structure is larger than the loss factor tan $\delta_M$ of a polymeric material constituting the sea phase of the sea-island structure, and the ratio of the elastic modulus of the polymeric material constituting the island phase to the elastic modulus of the polymeric material constituting the sea phase is in the range of 0.1 to 2; (2) The damping material wherein gas bubbles are present in the polymeric material constituting the sea phase; (3) The damping material wherein the shear modulus $\mu_I$ of the polymeric material constituting the island phase is in the range of $5 \times 10^5$ to $4 \times 10^9$ Pa; (4) The damping material wherein the loss factor tan $\delta_I$ of the polymeric material constituting the island phase is in the range of 0.1 to 10; (5) A damping metal sheet including a damping structure in which the above damping material is bonded on a metal sheet; and the like.

FIG. 1

SEA PHASE RESIN tan $\delta_M$ = 0.1, ISLAND PHASE RESIN 50%

RIGIDITY MODULUS RATIO $\mu_I/\mu_M$

tan $\delta_I$ OF ISLAND PHASE RESIN

EP 1 707 608 A1

**Description**

Technical Field

The present invention belongs to a technical field relating to a vibration damping material and a vibration damping composite metal sheet.

Background Art

Structural materials such as steel sheets, aluminum sheets, and industrial plastics have high elastic modulus and are widely used for providing rigidity and strength required for structures. On the other hand, these materials have low vibration damping performance. In particular, in structures requiring low noise, such as automobile bodies, railroad vehicles, and house roofs, a countermeasure for imparting desired vibration damping performance, for example, bonding a damping material on the surface of a structure, is taken in order to prevent the emittance of undesirable sounds caused by an insufficient vibration damping performance of the structural material.

Damping structures in which such a countermeasure is taken are broadly divided into two types.

A first damping structure is produced by bonding a damping material on the surface of a structural material, and laminating a sheet composed of the same material as the structural material or a sheet having a rigidity close to that of the structural material. This structure is referred to as a constrained-type structure because the elongation deformation of the damping material is constrained by the sheet provided thereon and thus the damping material is easily subjected to shear deformation. The sheet provided on the damping material is referred to as a constraining sheet.

A second damping structure is produced by bonding a damping material on the surface of a structural material, the damping material having an elastic modulus that is as close as possible to that of the structural material. This structure is referred to as an unconstrained-type structure because the elongation deformation of the damping material is not constrained compared with the first constrained-type structure.

Examples of the first constrained-type damping material include products produced by sandwiching a damping material between two elastic sheets such as steel sheets, aluminum sheets, glass sheets, and hard resin sheets. In particular, when the elastic sheets are steel sheets or aluminum sheets, the sheets can be used as a structure by press forming without further treatment because they can be subjected to plastic forming. The product produced by sandwiching a damping material between two steel sheets is widely known as a vibration damping steel sheet.

Examples of a method of bonding a damping material on the surface of a structural material include a method of providing the damping material itself with a satisfactory adhesive force and a method of applying an adhesive on the surface of the damping material. In particular, as represented by the damping steel sheet and the like, when a material prepared by adhering a damping material in advance on the surface of an elastic sheet such as a metal sheet is pressed for use, it is necessary to increase the interfacial peeling strength between the adhesive or the damping material and the elastic sheet, the strength of the adhesive, and the strength of the damping material.

In addition, it is necessary to increase the damping performance as much as possible so as to achieve the original purpose. It is known that the damping function possessed by a damping material becomes maximum at the glass transition temperature thereof. Therefore, it is important that the glass transition temperature of the damping material is controlled to a temperature of the operating environment according to the temperature of the environment where the damping material is used.

Regarding commercially available adhesives [(1) to (7) described below] each having a satisfactory adhesive strength, the shear modulus $\mu_1$ and the loss factor $\tan \delta$ $(=\mu_2/\mu_1)$ were examined in the frequency range of 10 Hz to 10 kHz and at temperatures of 20°C to 80°C. These results [(1) to (7) described below] were compared with, for example, a suitable range of the shear modulus ($7 \times 10^4 \leq (\mu_1, \mu_2) \leq 7 \times 10^6$ Pa and $0.5 \leq \tan \delta \leq 3.0$) in the case where a constrained-type structure composed of elastic sheet/adhesive/elastic sheet was produced using aluminum sheets as the elastic sheets. The results showed that most of the adhesives did not have satisfactory performance.

(1) Base resin: an epoxy, Curing agent: a polyamide

A type: $\mu_1 = 4 \times 10^8$ to $2 \times 10^9$ Pa, $\tan \delta = 0.04$ to $0.4$
B type: $\mu_1 = 1 \times 10^8$ to $8 \times 10^8$ Pa, $\tan \delta = 0.1$ to $0.8$

(2) Base resin: an epoxy, Curing agent: a modified silicone

$$\mu_1 = 2 \times 10^7 \text{ to } 3 \times 10^8 \text{ Pa, } \tan \delta = 0.1 \text{ to } 0.3$$

(3) Base resin: an epoxy 48% + calcium carbonate 45% Curing agent: a modified silicone 55% + calcium carbonate 40%

$$\mu_1 = 1 \times 10^7 \text{ to } 2 \times 10^8 \text{ Pa, } \tan \delta = 0.1 \text{ to } 0.3$$

(4) Base resin and curing agent: modified acrylates

$$\mu_1 = 1 \times 10^8 \text{ to } 8 \times 10^8 \text{ Pa, } \tan \delta = 0.1 \text{ to } 0.3$$

(5) One component type polyurethane

A type: $\mu_1 = 1 \times 10^6$ to $1 \times 10^7$ Pa, $\tan \delta = 0.3$ to $0.6$
B type: $\mu_1 = 9 \times 10^5$ to $1 \times 10^7$ Pa, $\tan \delta = 0.3$ to $0.5$

(6) A polyolefin-based adhesive

$$\mu_1 = 1 \times 10^7 \text{ to } 2 \times 10^8 \text{ Pa, } \tan \delta = 0.3 \text{ to } 0.5$$

(7) A chloroprene rubber-based adhesive

$$\mu_1 = 5 \times 10^5 \text{ to } 1 \times 10^6 \text{ Pa, } \tan \delta = 0.1 \text{ to } 0.2$$

Furthermore, hitherto, regarding the elastic modulus of a polymeric material used and the elastic modulus of another polymeric material mixed therewith, specific numerical values have not been described. The types of material and the mixing ratio thereof for effectively improving the damping property have also not been disclosed. In addition, a design guideline as to whether the elastic modulus of the mixed material is a numerical value suitable for the constrained-type structure has not been disclosed. Thus, no specific methods for selecting resins have been disclosed and such methods are still unknown.

Disclosure of Invention

The present invention has been achieved by focusing on the above situation, and an object of the present invention is to provide a damping material and a damping metal sheet that have excellent damping performance.
To achieve the above object, the present inventors have conducted intensive studies and completed the present invention. According to the present invention, the above object can be achieved.
The present invention thus completed and that has achieved the above object relates to a damping material and a damping metal sheet. The present invention relates to damping materials described in claims 1 to 7 (damping materials according to a first invention to a seventh invention) and a damping metal sheet described in claim 8 (damping metal sheet according to an eighth invention), and provides the following structures.
Namely, the damping material described in claim 1 is a damping material including at least one type of polymeric material, wherein the polymeric material has a sea-island structure, the loss factor $\tan \delta_I$ of a polymeric material constituting the island phase of the sea-island structure is larger than the loss factor $\tan \delta_M$ of a polymeric material constituting the sea phase of the sea-island structure, and the ratio of the elastic modulus of the polymeric material constituting the island phase to the elastic modulus of the polymeric material constituting the sea phase is in the range of 0.1 to 2 [first invention].
The damping material described in claim 2 is the damping material according to claim 1, wherein gas bubbles are present in the polymeric material constituting the sea phase [second invention].
The damping material described in claim 3 is the damping material according to claim 1 or 2, wherein the shear modulus $\mu_I$ of the polymeric material constituting the island phase is in the range of $5 \times 10^5$ to $4 \times 10^9$ Pa [third invention].
The damping material described in claim 4 is the damping material according to any one of claims 1 to 3, wherein the loss factor tan $\delta_I$ of the polymeric material constituting the island phase is in the range of 0.1 to 10 [fourth invention].

The damping material described in claim 5 is the damping material according to any one of claims 1 to 4, wherein the shear modulus $\mu_M$ of the polymeric material constituting the sea phase is in the range of $5 \times 10^6$ to $2 \times 10^9$ Pa [fifth invention].

The damping material described in claim 6 is the damping material according to any one of claims 1 to 5, wherein two or more types of polymeric material are contained [sixth invention].

The damping material described in claim 7 is the damping material according to any one of claims 1 to 5, wherein one type of polymeric material is contained and the polymeric material is a graft copolymer or a block copolymer [seventh invention].

The damping material described in claim 8 is a damping metal sheet having a damping structure in which the damping material according to any one of claims 1 to 7 is bonded on a metal sheet [eighth invention].

The damping material of the present invention has excellent damping performance. According to this damping material, the damping property of a structural material or the like can be improved. The vibration damping composite metal sheet of the present invention has excellent damping property. According to this damping metal sheet, the damping property of a structural material or the like can be improved.

Brief Description of the Drawings

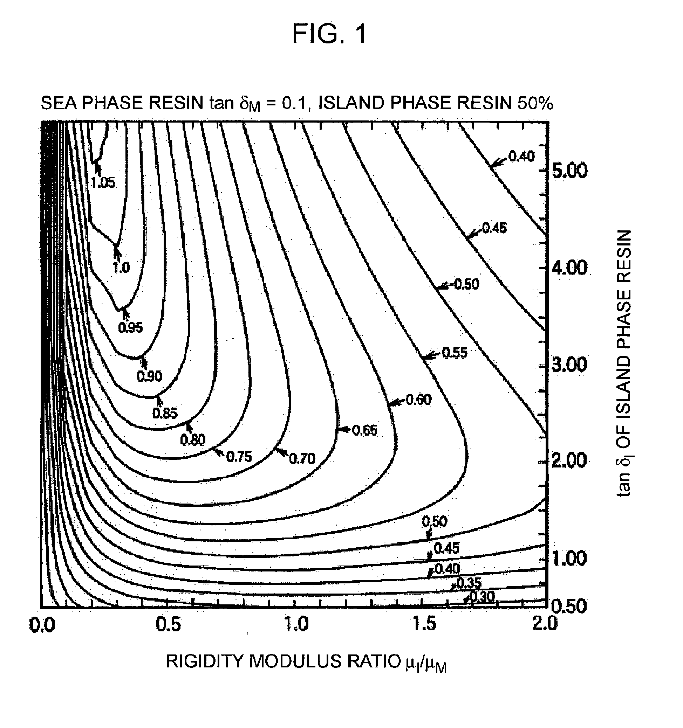

Fig. 1 is a graph showing the measurement results of the loss factor tan $\delta_{ALL}$ of a damping material (wherein an island phase resin is mixed in a volume content of 50% with a sea phase resin having a loss factor tan $\delta_M$ of 0.1). The abscissa represents the rigidity modulus ratio $\mu_I/\mu_M$ and the ordinate represents tan $\delta_I$ of the island phase resin. The curved lines in the figure represent contour lines of the loss factor tan $\delta_{ALL}$ of the damping material.

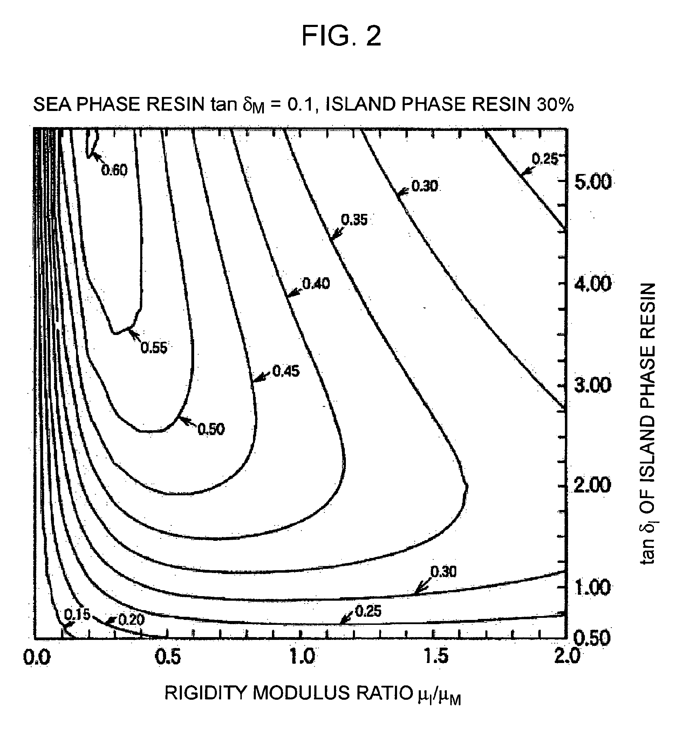

Fig. 2 is a graph showing the measurement results of the loss factor tan $\delta_{ALL}$ of a damping material (wherein an island phase resin is mixed in a volume content of 30% with a sea phase resin having a loss factor tan $\delta_M$ of 0.1). The abscissa represents the rigidity modulus ratio $\mu_I/\mu_M$ and the ordinate represents tan $\delta_I$ of the island phase resin. The curved lines in the figure represent contour lines of the loss factor tan $\delta_{ALL}$ of the damping material.

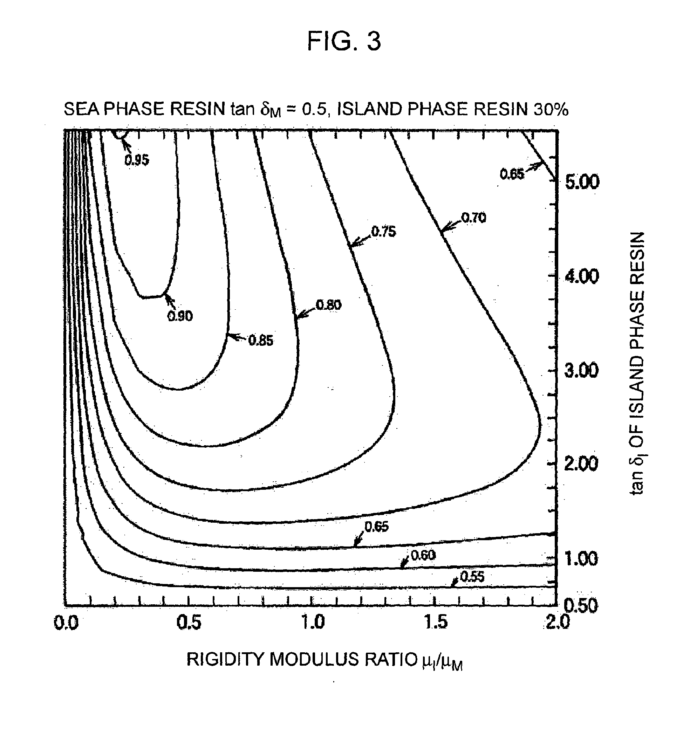

Fig. 3 is a graph showing the measurement results of the loss factor tan $\delta_{ALL}$ of a damping material (wherein an island phase resin is mixed in a volume content of 30% with a sea phase resin having a loss factor tan $\delta_M$ of 0.5). The abscissa represents the rigidity modulus ratio $\mu_I/\mu_M$ and the ordinate represents tan $\delta_I$ of the island phase resin. The curved lines in the figure represent contour lines of the loss factor tan $\delta_{ALL}$ of the damping material.

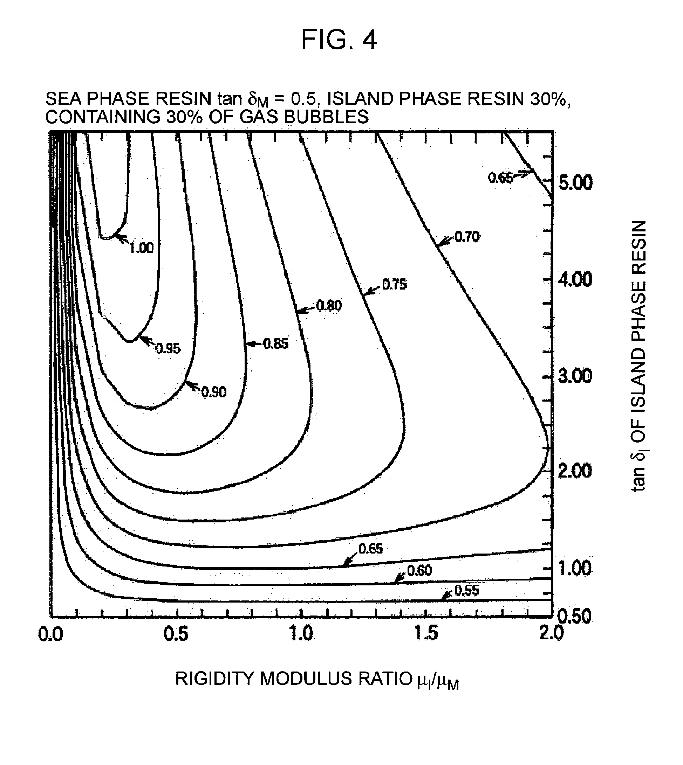

Fig. 4 is a graph showing the measurement results of the loss factor tan $\delta_{ALL}$ of a damping material (wherein an island phase resin is mixed in a volume content of 30% with a sea phase resin having a loss factor tan $\delta_M$ of 0.5 and, in addition, gas bubbles are formed in the sea phase resin in an amount of 30%). The abscissa represents the rigidity modulus (shear modulus) ratio $\mu_I/\mu_M$ and the ordinate represents tan $\delta_I$ of the island phase resin. The curved lines in the figure represent contour lines of the loss factor tan $\delta_{ALL}$ of the damping material.

Best Mode for Carrying Out the Invention

The present inventors have conducted various intensive studies on the basis of the following novel idea: In place of imparting an adhesive strength to a damping resin having high vibration damping performance, a damping material having high vibration damping performance is mixed with an adhesive that has a satisfactory adhesive strength but has a low damping property. By forming a sea-island structure in which the damping material floats in the form of islands on the adhesive, which is compared to a sea, a satisfactory adhesive strength and an increase in the damping performance are combined.

As a result, it has been found that, in a blended damping material having such a sea-island structure, when the ratio of elastic modulus (the ratio of elastic modulus is equal to the ratio of shear modulus and the ratio of rigidity modulus) of the elastic modulus of an island phase resin (polymeric material constituting the island phase) to the elastic modulus of a sea phase resin (polymeric material constituting the sea phase) is in the range of 0.1 to 2.0, the loss factor tan $\delta_{ALL}$ of the blended damping material can be significantly increased. Furthermore, it has been found that the above elastic modulus ratio is preferably in the range of 0.1 to 0.6 and further preferably in the range of 0.1 to 0.4. In such a case, a higher loss factor tan $\delta_{ALL}$ can be ensured.

Additionally, the elastic modulus ratio (the shear modulus ratio and the rigidity modulus ratio) is equal to the ratio of longitudinal elastic modulus. For example, when the elastic modulus ratio = 1, the longitudinal elastic modulus ratio = 1.

Herein, the sea-island structure means a structure in which two or more types of polymeric material that are incompatible with each other are mixed, and one polymer is present in the form of islands on the other polymer, which is compared to a sea, in the state of phase separation. For example, when water and oil are mixed and stirred, the sea-island structure in which oil particles float on the water is formed. However, because of the low viscosity of water, the oil particles floating on the water repeatedly coalesce and the structure is eventually separated into two layers, i.e., water and oil layers. However, regarding polymers each having high viscosity, since island phase polymer particles do not immediately coalesce with each other, the sea-island structure can be fixed by, for example, a method of adding a curing agent or a copolymer (referred to as compatibilizer) prepared by copolymerizing the polymers to be mixed.

That is, the sea-island structure in the present invention means a two-layer structure in which, in a multicomponent polymeric material composed of incompatible polymers, a component is dispersed in the form of isolated particles (island phase: dispersed phase) in a continuous phase (sea phase: matrix phase) composed of another component.

Among the phases constituting the sea-island structure, the sea phase in the present invention is a continuous phase composed of a phase having a high area ratio relative to the entire cross section obtained when the sea-island structure is observed with, for example, a scanning or transmission electron microscope (SEM or TEM). The island phase is a dispersed phase composed of a component having a low area ratio relative to the entire cross section obtained by the above observation.

The mean dispersed particle size in the sea-island structure is several micrometers to several hundred micrometers.

It is also known that block copolymers or graft copolymers each prepared by copolymerizing two or more types of monomer form an island phase on their own, the island phase having a size on the angstrom order (for example, about several tens of angstroms). Such a phenomenon is particularly referred to as microphase separation. In this case, the polymeric material is composed of a single polymer. In the present invention, the sea-island structure also includes this microphase separation.

Furthermore, the present inventors have found the following. By dispersing gas bubbles in a sea phase resin, the shear modulus $\mu_1$ of a blended damping material can be controlled so as to set the value in the above-described suitable range of the viscoelastic property. In addition, the gas bubbles increase the shear strain energy of an island phase resin (island phase damping material) to increase the loss factor $\tan \delta_{ALL}$ (damping performance) of the blended damping material.

In addition to polymeric materials, the damping material of the present invention may appropriately contain other components used in normal polymer compositions, such as a filler, a pigment, a coupling agent, a leveling agent, or a viscosity adjuster, as long as the advantages of the present invention are not impaired.

The present invention has been completed on the basis of these findings and the like, and provides a damping material having the above structure and a metal sheet on which the damping material is bonded.

Namely, a damping material of the present invention thus completed includes at least one type of polymeric material, wherein the polymeric material has a sea-island structure, the loss factor $\tan \delta_I$ of a polymeric material constituting the island phase of the sea-island structure is larger than the loss factor $\tan \delta_M$ of a polymeric material constituting the sea phase of the sea-island structure, and the ratio of the elastic modulus of the polymeric material constituting the island phase to the elastic modulus of the polymeric material constituting the sea phase is in the range of 0.1 to 2 [first invention].

As is apparent from the above finding, this damping material can significantly increase the loss factor $\tan \delta_{ALL}$, and thus has excellent damping performance. That is, the polymeric material has the sea-island structure, the loss factor $\tan \delta_I$ of the polymeric material constituting the island phase of the sea-island structure is larger than the loss factor $\tan \delta_M$ of the polymeric material constituting the sea phase of the sea-island structure, and the ratio of the elastic modulus of the polymeric material constituting the island phase to the elastic modulus of the polymeric material constituting the sea phase is in the range of 0.1 to 2, thereby the loss factor $\tan \delta_{ALL}$ of the damping material can be significantly increased, and thus the damping material has excellent damping performance.

Accordingly, the damping material of the present invention has excellent damping performance. According to this damping material, the damping property of a structural material can be improved.

When the ratio of the elastic modulus of the polymeric material constituting the island phase to the elastic modulus of the polymeric material constituting the sea phase is from 0.0 to less than 0.1, the degree of improvement (increase) in the loss factor $\tan \delta_{ALL}$ of the damping material is small and the effect of increasing the damping performance is not satisfactory. On the other hand, when this ratio of elastic modulus exceeds 2, the degree of increase in the loss factor $\tan \delta_{ALL}$ of the damping material is small and the effect of increasing the damping performance is not satisfactory.

In the damping material of the present invention, as is apparent from the above finding, when gas bubbles are present in the polymeric material constituting the sea phase, the shear modulus $\mu_1$ of the damping material can be controlled by the gas bubbles so as to set the value in the above-described suitable range of the viscoelastic property. In addition, the gas bubbles can increase the shear strain energy of the polymeric material constituting the island phase to further increase the loss factor $\tan \delta_{ALL}$ of the damping material. Consequently, the damping performance can be further increased [second invention]. The gas bubbles may be present when the damping material is prepared by mixing the material constituting the sea phase with the material constituting the island phase. However the gas bubbles are not limited thereto. Alternatively, the gas bubbles may be formed (or may form) after the damping material is prepared. That is, the duration of the presence of the gas bubbles is not limited and it is sufficient that the gas bubbles are present when the damping material is produced or thereafter.

In the damping material of the present invention, when the shear modulus $\mu_I$ of the polymeric material constituting the island phase is in the range of $5 \times 10^5$ to $4 \times 10^9$ Pa, the loss factor tan $\delta_{ALL}$ of the damping material can be increased more reliably and a higher damping performance can be provided [third invention].

When the loss factor tan $\delta_I$ of the polymeric material constituting the island phase is in the range of 0.1 to 10, the loss factor tan $\delta_{ALL}$ of the damping material can be further increased and a higher damping performance can be provided [fourth invention].

When the shear modulus $\mu_M$ of the polymeric material constituting the sea phase is in the range of $5 \times 10^6$ to $2 \times 10^9$ Pa, a higher adhesive strength can be ensured [fifth invention].

A damping metal sheet of the present invention has a damping structure in which the damping material according to any one of the first to seventh inventions is bonded on a metal sheet. This damping metal sheet has excellent damping property. According to this damping metal sheet, the damping property of a structural material or the like can be improved [eighth invention].

The metal sheet constituting the damping metal sheet is not particularly limited as long as the metal sheet is generally used as a structural material. Specific examples thereof include aluminum alloy sheets, steel sheets, and a titanium sheet.

The loss factor tan $\delta$ in the present invention is an index representing the magnitude of the vibration damping performance of a material, and is defined as the tangent (tan) of the phase difference $\delta$ between a stress F applied to the material and a displacement D. Alternatively, the loss factor tan $\delta$ can be defined as the ratio ($\mu_I/\mu_R$) of the imaginary part $\mu_I$ to the real part $\mu_R$ of the complex elastic modulus $\mu_C$ obtained by a complex notation of the stress F and the displacement D.

Herein, tan $\delta_{ALL}$ represents the loss factor of a damping material having the sea-island structure, tan $\delta_M$ represents the loss factor of the sea phase of the damping material, and tan $\delta_I$ represents the loss factor of the island phase of the damping material.

The shear modulus can be measured by, for example, the following measuring method.

Strip-shaped samples are prepared using the object damping materials (a polymeric material constituting the sea phase alone, a polymeric material constituting the island phase alone, and a blended damping material). A sample, a flat plate fixture, and a sample are disposed inside a U-shaped fixture, in that order. The U-shaped fixture and the samples, and the samples and the flat plate fixture are firmly fixed together.

Subsequently, one of the fixtures is fixed and the other fixture is vibrated so that a shear deformation is generated in the sample. By measuring the time waveforms of the stress F and the displacement D, and the phase difference $\delta$ at that time, the dynamic complex shear modulus $\mu_C$ can be calculated using the following equation.

That is, the dynamic complex shear modulus $\mu_C$ can be calculated using the following equation:

$$\mu_C = \mu(1 + j\tan \delta)$$

(wherein $\mu = (2*T/L*W)*A/B \cdot \cos \delta$, T represents the thickness of the strip-shaped sample, L represents the length of the strip-shaped sample, W represents the width of a strip-shaped sample, A represents the amplitude of the stress F, B represents the amplitude of the displacement D, and j represents the imaginary unit.)

Furthermore, tan $\delta$ (also expressed by $\eta$) can be calculated from the dynamic complex shear modulus $\mu_C$ and is calculated as the ratio of the imaginary part $\mu_I$ to the real part $\mu_R$ of the dynamic complex shear modulus $\mu_C$, i.e., tan $\delta = \mu_I/\mu_R$.

Examples and comparative examples of the present invention will be described below. The present invention is not limited to the examples and may be performed with appropriate modifications within a range that can match the purpose of the present invention. These modifications are also included in the technical scope of the present invention.

EXAMPLE 1

Shear moduli and loss factors [the complex shear modulus $\mu_C$ is represented by $\mu_C = \mu(1 + j\tan \delta)$] of various resins having high adhesive strength and resins having large loss factor were examined. These resins were mixed to prepare blended damping materials having the sea-island structure and the complex shear moduli $\mu_{CALL} = \mu_{ALL}(1 + j\tan \delta_{ALL})$ of these damping materials were calculated. In the equation, j represents the imaginary unit.

Figs. 1 and 2 show examples of the results of the calculated loss factor tan $\delta_{ALL}$. The ordinate represents the

loss factor (tan $\delta_I$) of an island phase resin (polymeric material constituting the island phase of the sea-island structure). The abscissa represents the ratio $\mu_I/\mu_M$ (that is equal to the elastic modulus ratio and the rigidity modulus ratio) of the shear modulus $\mu_I$ (expressed as rigidity modulus in the figures) of the island phase resin to the shear modulus $\mu_M$ of the sea phase resin (polymeric material constituting the sea phase of the sea-island structure). The curved lines in the figures represent contour lines of the loss factor tan $\delta_{ALL}$ of the damping materials. The values of the loss factor tan $\delta_{ALL}$ of the damping material are the same on each line. The numbers added to each of the contour lines represent the value of the loss factor tan $\delta_{ALL}$ of the damping material. For example, the contour line with a number of 0.5 means that the loss factor tan $\delta_{ALL}$ of the damping material is 0.5 on this line (hereinafter the same).

Fig. 1 shows the results in the case where an island phase resin is mixed in a volume content of 50% with a sea phase resin having a loss factor tan $\delta$ of 0.1. Fig. 2 shows the results in the case where an island phase resin is mixed in a volume content of 30% with a sea phase resin having a loss factor tan $\delta$ of 0.1. Each of the volume contents of the island phase resin is the ratio (percent) of the volume of the island phase resin to the total volume of the damping material having the sea-island structure. It is known that the microphase separation, which forms an island phase domain on the angstrom order, occurs in block copolymers composed of two or more types of polymers (polymer chains). In a broad sense, the meaning of the term "volume content" also includes the ratio of such an island phase domain to the total volume.

Referring to Fig. 1, when the rigidity modulus (shear modulus) ratio $\mu_I/\mu_M$ of the rigidity modulus of the island phase resin to that of the sea phase resin is in the range of 0.1 to 2.0, the loss factor tan $\delta_{ALL}$ of the damping material is 0.5 or more. Furthermore, when the rigidity modulus ratio $\mu_I/\mu_M$ of the rigidity modulus (shear modulus) of the island phase resin to that of the sea phase resin is in the range of 0.1 to 0.4, the loss factor tan $\delta_{ALL}$ of the damping material is 1.0 or more.

Referring to Fig. 2, when the rigidity modulus (shear modulus) ratio $\mu_I/\mu_M$ of the rigidity modulus (shear modulus) of the island phase resin to that of the sea phase resin is in the range of 0.1 to 0.6, the loss factor tan $\delta_{ALL}$ of the damping material is 0.5 or more.

The results of the above examination (including the results shown in Figs. 1 and 2) verified the following:

When the rigidity modulus (shear modulus) ratio $\mu_I/\mu_M$ of the rigidity modulus (shear modulus) of the island phase resin $\mu_I$ to that of the sea phase resin $\mu_M$ is in the range of 0.1 to 2.0, the loss factor tan $\delta_{ALL}$ of the damping material can be significantly increased. Furthermore, when this rigidity modulus (shear modulus) ratio is in the range of 0.1 to 0.6, the loss factor tan $\delta_{ALL}$ of the damping material can be more reliably increased. Furthermore, when this rigidity modulus (shear modulus) ratio is in the range of 0.1 to 0.4, the loss factor tan $\delta_{ALL}$ of the damping material can be more reliably increased.

EXAMPLE 2

Blended damping materials having the sea-island structure were prepared by the same method as that in Example 1 and the same measurements and examinations were performed. However, gas bubbles were formed in the sea phase resin of some of the blended damping materials.

Figs. 3 and 4 show examples of the results. The ordinate and the abscissa represent those in Figs. 1 and 2. The lines in the figures represent contour lines of the loss factor tan $\delta_{ALL}$ of the damping materials as in Figs. 1 and 2. Fig. 3 shows the results in the case where an island phase resin is mixed in a volume content of 30% with a sea phase resin having a loss factor tan $\delta_M$ of 0.5. Fig. 4 shows the results in the case where an island phase resin is mixed in a volume content of 30% with a sea phase resin having a loss factor tan $\delta_M$ of 0.5 and, in addition, gas bubbles are formed in the sea phase resin in a volume content of 30%.

As is apparent from Figs. 3 and 4, in the case of Fig. 3, even when the loss factor tan $\delta_I$ of the island phase resin is increased to 5.5, the loss factor tan $\delta_{ALL}$ of the damping material cannot be increased to 1.0. In contrast, in the case of Fig. 4, by forming gas bubbles in the sea phase resin in an amount of 30%, when an island phase resin having a loss factor tan $\delta_I$ of about 3.5 is mixed in a volume content of 30%, the loss factor tan $\delta_{ALL}$ of the damping material can be increased to 1.0.

The above gas bubbles may be formed by the following method: Capsule particles containing a gas therein are mixed in the sea phase resin before the sea phase resin and the island phase resin are mixed, and the resulting sea phase resin and the island phase resin are then mixed to prepare the damping material.

Alternatively, a foaming agent that generates gas bubbles by vaporizing with heat may be mixed in the sea phase resin in advance and the damping material may be prepared. Subsequently, gas bubbles may be formed by heating before the resulting damping material is used as a damping structure. That is, for example, the gas bubbles may be formed after the damping material is bonded on a metal sheet and before the resulting metal sheet is used as a product, or the gas bubbles may be formed after the damping material is bonded on a metal sheet and a forming process is performed, and before the resulting metal sheet is used as a product.

According to the above methods, the elastic modulus of the sea phase resin can be set to a high value before heating, in which gas bubbles are not formed yet, and a stress concentration generated around gas bubbles disposed inside the sea phase resin during the forming process can also be prevented. As a result, the adhesive strength can be increased. Gas bubbles are then formed by heating before the damping material is used as a product, thereby the elastic modulus of the damping material can be set in the above-described suitable range and the loss factor tan $\delta_{ALL}$ can be further increased. That is, this damping material has the following advantage: Before being used as a product, the damping material has excellent formability and adhesive strength, whereas during use as a product, the damping material has excellent damping performance.

Thus, the formation of gas bubbles in the sea phase resin can extend the choice of the polymeric material used as the sea phase resin and improve the adhesive strength. Industrial Applicability

The damping material of the present invention has excellent damping performance, and can improve the damping property of structural materials. Accordingly, the damping material of the present invention can be suitably used for structural materials that require imparting vibration damping performance in order to, for example, reduce the level of undesirable sounds caused by an insufficient vibration damping performance of the structural materials.

## Claims

1. A damping material comprising:

   at least one type of polymeric material,
   wherein the polymeric material has a sea-island structure,
   the loss factor tan $\delta_I$ of a polymeric material constituting the island phase of the sea-island structure is larger than the loss factor tan $\delta_M$ of a polymeric material constituting the sea phase of the sea-island structure, and
   the ratio of the elastic modulus of the polymeric material constituting the island phase to the elastic modulus of the polymeric material constituting the sea phase is in the range of 0.1 to 2.

2. The damping material according to claim 1, wherein gas bubbles are present in the polymeric material constituting the sea phase.

3. The damping material according to claim 1 or 2,
   wherein the shear modulus $\mu_I$ of the polymeric material constituting the island phase is in the range of $5 \times 10^5$ to $4 \times 10^9$ Pa.

4. The damping material according to any one of claims 1 to 3, wherein the loss factor tan $\delta_I$ of the polymeric material constituting the island phase is in the range of 0.1 to 10.

5. The damping material according to any one of claims 1 to 4, wherein the shear modulus $\mu_M$ of the polymeric material constituting the sea phase is in the range of $5 \times 10^6$ to $2 \times 10^9$ Pa.

6. The damping material according to any one of claims 1 to 5, wherein two or more types of polymeric material are contained.

7. The damping material according to any one of claims 1 to 5, wherein one type of polymeric material is contained and the polymeric material is a graft copolymer or a block copolymer.

8. A damping metal sheet comprising a damping structure in which the damping material according to any one of claims 1 to 7 is bonded on a metal sheet.

# FIG. 1

SEA PHASE RESIN tan $\delta_M$ = 0.1, ISLAND PHASE RESIN 50%

RIGIDITY MODULUS RATIO $\mu_I/\mu_M$

tan $\delta_I$ OF ISLAND PHASE RESIN

# FIG. 2

SEA PHASE RESIN tan $\delta_M$ = 0.1, ISLAND PHASE RESIN 30%

# FIG. 3

SEA PHASE RESIN tan $\delta_M$ = 0.5, ISLAND PHASE RESIN 30%

RIGIDITY MODULUS RATIO $\mu_I/\mu_M$

tan $\delta_I$ OF ISLAND PHASE RESIN

# FIG. 4

SEA PHASE RESIN tan $\delta_M$ = 0.5, ISLAND PHASE RESIN 30%, CONTAINING 30% OF GAS BUBBLES

RIGIDITY MODULUS RATIO $\mu_I/\mu_M$

<div align="center">**INTERNATIONAL SEARCH REPORT**</div>

| | International application No. |
|---|---|
| | PCT/JP2005/000603 |

A. CLASSIFICATION OF SUBJECT MATTER
   Int.Cl$^7$  C09K3/00, B32B15/08, B23B27/28, F16F15/02, F16F15/04,
               F16F7/08, C08L101/00

According to International Patent Classification (IPC) or to both national classification and IPC

B. FIELDS SEARCHED

Minimum documentation searched (classification system followed by classification symbols)
   Int.Cl$^7$  C09K3/00, B32B15/08, B23B27/28, F16F15/02-15/08,
               F16F7/08, C08L101/00-101/16

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 4-39360 A  (Kawasaki Steel Corp.),<br>10 February, 1992 (10.02.92),<br>Claims 1 to 17; page 4, lower left column,<br>line 15 to lower right column, line 8;<br>page 9, lower right column, line 13 to<br>page 10, upper left column, line 12, upper<br>left column, line 15 to upper right column,<br>line 12, lower left column, line 6 to lower<br>right column, line 18; page 14, lower right<br>column, line 19 to page 15, lower right<br>column, line 8; page 17; table 1<br>(Family: none) | 1,3-8<br>2 |

☒  Further documents are listed in the continuation of Box C.        ☐   See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 March, 2005 (30.03.05) | 26 April, 2005 (26.04.05) |

| Name and mailing address of the ISA/<br>    Japanese Patent Office | Authorized officer |
|---|---|
| Facsimile No. | Telephone No. |

Form PCT/ISA/210 (second sheet) (January 2004)

| INTERNATIONAL SEARCH REPORT | International application No. |
| --- | --- |
| | PCT/JP2005/000603 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2000-169614 A  (Tokai Rubber Industries, Ltd.),<br>20 June, 2000 (20.06.00),<br>Claims 1 to 5; Par. No. [0012]<br>& US 6265475 B1 | 2 |

Form PCT/ISA/210 (continuation of second sheet) (January 2004)